# DEMANDE DE BREVET EUROPEEN

(11) **EP 1 470 954 A1**
(43) Date de publication de la demande: **27.10.2004**
(21) Numéro de dépôt: 04300161.9
(22) Date de dépôt: 24.03.2004
(51) Int. Cl.: B60N 2/36

(54) **Siège pour véhicule**

(30) Priorité: 31.03.2003 FR 0303957
(71) Demandeur: Renault s.a.s., 92100 Boulogne Billancourt (FR)
(72) Inventeur: Riou, Jean Christophe, 78640 Villiers st Frederic (FR); Beaufour, Thierry, 78320 Levis St-Nom (FR)

(57) **Abrégé**

Siège pour véhicule automobile, le siège (10) comportant un piétement (12) et un fauteuil (14), le fauteuil étant mobile d'une position déployée à une position repliée sur un premier pied (20) du piétement monté entre le fauteuil et un élément (40) de plancher du véhicule. Le piétement comporte un second pied (22) qui s'étend entre le fauteuil et l'élément de plancher dans la position déployée du fauteuil et qui est séparé d'au moins l'un du fauteuil et de l'élément de plancher quand le fauteuil est dans la position repliée. Le piétement comporte une jambe de force (24) montée articulée à une première extrémité par rapport au fauteuil à un endroit distinct de celui où est monté le premier pied, une seconde extrémité de la jambe de force étant mobile entre une première et une seconde position sur le premier pied. Le premier pied (20) comporte une piste de guidage (54, 62) de la deuxième extrémité de la jambe de force (24) le long dudit pied et en ce que des éléments de liaison (64, 66, 68) maintiennent la deuxième extrémité de la jambe de force selon la piste de guidage.

## Description

La présente invention se rapporte à siège pour véhicule, en particulier un siège repliable.

Le brevet FR 2 787 405 décrit un siège pour véhicule automobile avec un piétement et un fauteuil. Le fauteuil est mobile d'une position déployée à une position repliée. Le fauteuil comporte une assise montée pivotante sur des pieds avant du piétement les pieds étant montés sur des rails solidaires du plancher du véhicule. Le piétement comporte des pieds arrière qui s'étendent entre le fauteuil et les rails où ils reposent dans la position déployée du siège. Les pieds arrières sont séparés des rails quand le fauteuil est dans la position repliée. Le piétement comporte des jambes de force montées articulées à une première extrémité sur l'assise du fauteuil à un endroit distinct de celui où est monté le premier avant, une seconde extrémité des jambes de force étant mobile entre une première et une seconde position sur le premier pied.

De tels sièges présentent l'inconvénient que le fauteuil placé dans sa position repliée doit être attaché à une partie fixe du véhicule pour éviter tout déplacement parasite du siège pour une sécurité maximum en cas de crash du véhicule.

Le but de l'invention est d'améliorer un tel siège, en particulier concernant sa tenue au choc en cas de grave accident du véhicule.

Dans ce but, l'invention propose un siège pour véhicule automobile, le siège comportant un piétement et un fauteuil, le fauteuil étant mobile d'une position déployée à une position repliée sur un premier pied du piétement monté entre le fauteuil et un élément de plancher du véhicule, le piétement comportant un second pied qui s'étend entre le fauteuil et l'élément de plancher dans la position déployée du fauteuil et qui est séparé d'au moins l'un du fauteuil et de l'élément de plancher quand le fauteuil est dans la position repliée, le piétement comportant une jambe de force montée articulée à une première extrémité par rapport au fauteuil à un endroit distinct de celui où est monté le premier pied, une seconde extrémité de la jambe de force étant mobile entre une première et une seconde position sur le premier pied, caractérisé en ce que le premier pied comporte une piste de guidage de la deuxième extrémité de la jambe de force le long du pied et en ce que des éléments de liaison maintiennent la deuxième extrémité de la jambe de force selon la piste de guidage.

La piste de guidage peut comporter une glissière ménagée dans le premier pied, un barreau des éléments de liaison, solidaires de la deuxième extrémité de la jambe de force, étant apte à circuler dans la glissière.

La glissière peut être au moins partiellement parallèle à un bord transversal du premier pied.

Le barreau peut être monté dans le prolongement de la jambe de force.

La glissière peut être une fente ménagée dans le premier pied.

Le premier pied peut comporter au moins une encoche de réception de la deuxième extrémité de la jambe de force pour la position déployée du fauteuil et une encoche de réception de la jambe de force pour la position repliée du fauteuil.

Les encoches peuvent être ménagées dans un bord transversal du premier pied.

Les encoches peuvent être ménagées dans un bord transversal du premier pied, respectivement à proximité du plancher et à proximité de l'extrémité supérieure du premier pied.

La piste de guidage peut comporter au moins une portion inclinée vers l'avant du bas vers le haut, l'encoche de réception de la jambe de force pour la position repliée du fauteuil étant située à proximité de l'extrémité supérieure du premier pied et comportant une surface inclinée vers le bas de l'avant vers l'arrière, perpendiculairement à la direction de la jambe de force quand le fauteuil est en position replié.

La deuxième extrémité de la jambe de force peut être adaptée à circuler sur le bord transversal.

La deuxième extrémité de la jambe de force peut comporter un embout de coopération avec les encoches.

Le premier pied peut être un pied avant sensiblement vertical, la jambe de force étant inclinée vers l'arrière, du bas vers le haut.

Le siège peut comporter préférentiellement un élément d'étaiement incliné vers l'arrière, de haut en bas, entre le premier pied et le second pied.

Le fauteuil peut comporter une assise et un dossier pliable l'un contre l'autre.

L'assise et le dossier pliés l'un contre l'autre peuvent être placés sensiblement verticalement en position repliée du fauteuil.

L'invention se rapporte aussi à un véhicule caractérisé en ce qu'il comporte un siège tel que défini précédemment.

D'autres caractéristiques et avantages de l'invention apparaîtront clairement à la lecture de la description suivante d'un mode de réalisation non limitatif de celle-ci, en liaison avec les dessins annexés sur lesquels :
- la figure 1 est une vue de côté d'un siège selon l'invention dans sa position déployée,
- la figure 2 est une vue de côté d'un siège selon l'invention dans sa position repliée,
- la figure 3 est une vue arrière d'un siège selon l'invention dans sa position déployée,
- la figure 4 est un détail de la figure 1 représentant de côté le pied avant et la jambe de force d'un siège selon l'invention dans sa position déployée,
- la figure 5 est une coupe selon la ligne V-V de la figure 4.

Dans la description qui va suivre, les composants identiques ou analogues sont désignés par les mêmes références numériques sur l'ensemble des figures.

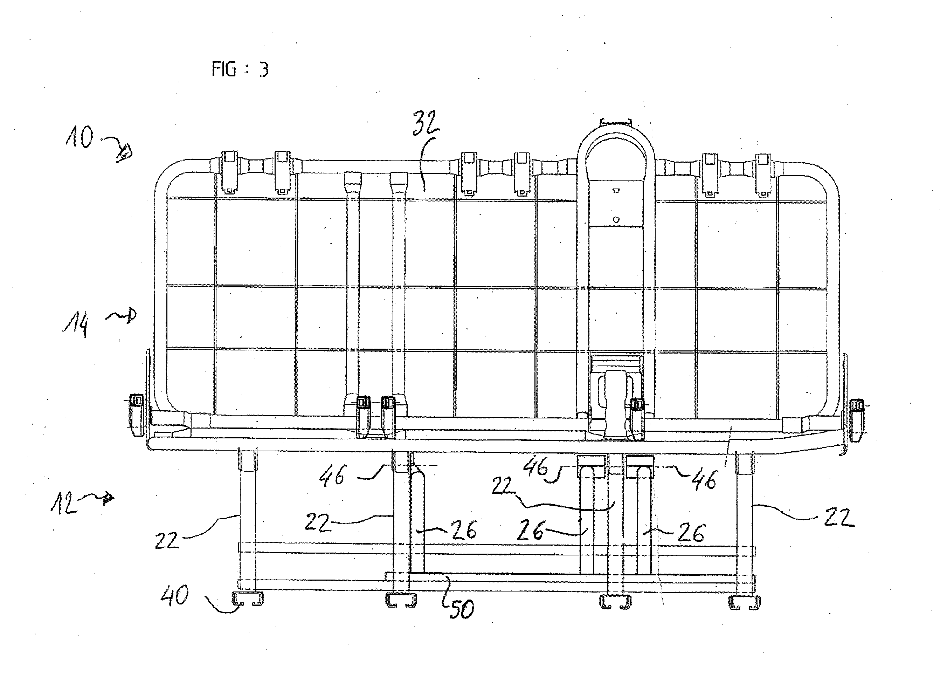

Comme représenté sur les figures, le siège 10 selon l'invention comporte un piétement 12 et un fauteuil 14. Le piétement comporte un pied avant 20, un pied arrière 22 et une jambe de force 24. Le fauteuil comporte une assise 30 et un dossier 32 présentant un rembourrage placé sur une structure. Seules certaines parties de la structure sont représentées. Dans l'exemple représenté, le siège 10 est une banquette (figure 3) qui comporte quatre pieds avant 20, quatre pieds arrière 22 et trois jambes de force 24 à proximité de pieds avant et arrière situés à environ un tiers de la longueur du fauteuil 14 de la banquette. Deux des jambes de force sont situées de chaque côté d'un pied situé au droit de l'ancrage d'une ceinture de sécurité embarqué sur le fauteuil. Typiquement, les pieds sont formés par une plaque de tôle ou un tube de section rectangulaire. La jambe de force est un tube de section circulaire. Pour plus de simplicité, seul un couple de pied associé à une jambe de force va être décrit dans la description qui va suivre.

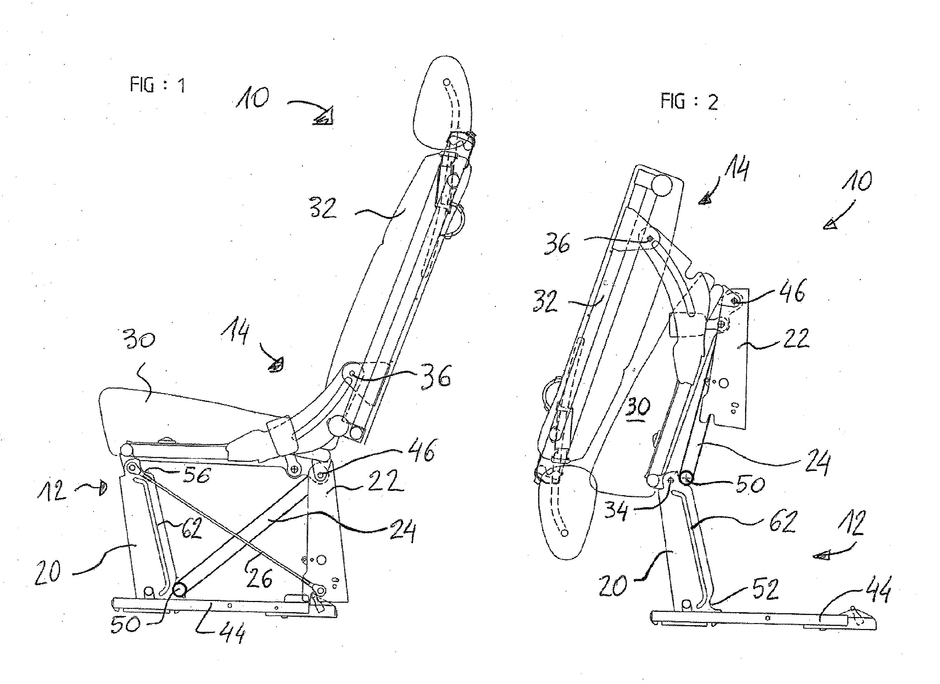

Le fauteuil 14 est mobile d'une position déployée (figure 1) à une position repliée (figure 2). L'extrémité avant de l'assise 30 est montée à rotation sur l'extrémité supérieure du pied avant 20 du piétement 12 selon un axe 34. L'extrémité inférieure du dossier 32 est monté à rotation à l'extrémité arrière du dossier 30 selon un axe 36.

En position déployée du fauteuil 14, le pied avant 20 et le pied arrière 22 s'étendent entre le fauteuil et un élément de plancher du véhicule. Dans la position repliée du fauteuil 14, le pied 22 est séparé d'au moins l'un du fauteuil 14 et de l'élément de plancher. Dans l'exemple représenté, l'élément de plancher est un rail 40 directement solidaire de panneaux du plancher, l'extrémité inférieure du pied avant 20 étant solidaire d'une embase 44 qui peut être démontée du plancher pour sortir le siège du véhicule. Les moyens de fixation du siège sur le plancher sont des moyens bien connus qu'il n'est pas indispensable de décrire. En variante non représentée, des navettes d'une embase du piétement sont adaptées à coulisser dans le rail selon un montage bien connu pour faire coulisser le siège longitudinalement dans le véhicule. Quel que soit le mode de montage du siège sur le plancher du véhicule, on considère que chaque pied avant 20 est un premier pied du siège 10. On entend par élément fixe du siège tout organe du siège qui ne connaît pas de mouvement quand le siège est manipulé entre sa position déployée et sa position repliée.

Dans l'exemple représenté, le pied arrière 22 est monté à rotation à l'extrémité arrière de l'assise 30 selon un axe 46. Dans la position déployée du siège 10, ou position déployée du fauteuil 14, l'extrémité inférieure du pied arrière 22 est accroché sur l'embase par l'intermédiaire de moyens de verrouillage bien connus de l'homme du métier. Dans la position repliée du siège 10, ou position repliée du fauteuil 14, l'extrémité inférieure du pied arrière 22 est décroché de l'embase 44, les moyens de verrouillage étant déverrouillés. En variante non représentée, le pied arrière pourrait être monté à rotation sur l'embase et les moyens de verrouillage pourraient être ménagé entre le fauteuil et l'extrémité supérieure du pied arrière.

L'extrémité supérieure de la jambe de force 24 est montée articulée selon l'axe 46 par rapport au fauteuil 14, l'axe d'articulation de la jambe de force 24 et du pied arrière par rapport à l'assise 30 étant le même. L'axe 46 est placé à un endroit distinct de celui où est placé l'axe 34 par l'intermédiaire duquel est monté le pied avant sur l'assise 30. L'extrémité inférieure de la jambe de force 24 est mobile entre une première et une seconde position sur le pied avant 20. L'extrémité inférieure de la jambe de force, dite extrémité libre, présente un embout 50. Dans l'exemple représenté, l'embout 50 est une barre cylindrique reliant l'extrémité inférieure des trois jambes de force 24.

Dans la position déployée du siège 10, l'embout 50 est en appui dans une encoche inférieure 52 de réception ménagée sur la tranche formant bord arrière 54 du pied avant 20. La jambe de force est inclinée sensiblement à 45° vers l'avant, du haut vers le bas. En cas de choc frontal violent alors qu'un usager est assis sur le fauteuil, la jambe de force 24 rigidifie le siège en évitant que le pied arrière 22 pivote vers l'avant. La répartition des efforts dans le siège est optimisée. La jambe de force est favorable à la sécurité de l'usager, d'autant que dans l'exemple représenté, le siège 10 présente une ceinture de sécurité embarquée, le siège, et en particulier le piétement 12, devant résister aux sollicitations dues à la retenue de l'usager en cas de choc violent.

Pour encore améliorer la tenue au choc du piétement, un renfort 26 tel un câble est fixé à une extrémité haute à la partie supérieure du pied avant 20 et à une extrémité basse à la partie inférieure du pied arrière 22.

Dans la position repliée du siège 10, l'embout 50 est en appui dans une encoche supérieure 56 de réception ménagée sur la tranche arrière 54 du pied avant 20. Le dossier 32 est plié vers l'avant contre l'assise 30. L'assise est en position quasiment verticale, inclinée vers l'arrière. L'avant de l'assise 30 est en porte à faux par rapport à la tranche avant du pied avant 20. Dans l'exemple représenté, la ligne reliant l'axe 34 et l'axe 46 est inclinée de 20° vers l'arrière par rapport à la verticale, du bas vers le haut, tout comme le dos du dossier. Cette ligne est sensiblement parallèle au plan arrière de la structure de l'assise 30. La jambe de force est repliée contre l'arrière de l'assise 30, inclinée à 15°, au bénéfice de la répartition des effort d'appui du fauteuil sur le piétement, en particulier lors d'un choc arrière.

L'angle d'inclinaison vers l'arrière peut être différent, sachant que plus la valeur de l'angle est grande, moins le siège replié est compact longitudinalement. Plus le siège est compact longitudinalement, plus le siège en position repliée permet de dégager de l'espace de chargement à l'emplacement habituellement occupé par l'assise quand le siège est en position déployée. Si le siège était incliné vers l'avant, il pourrait être plus encombrant et moins favorable à la capacité de chargement du véhicule, l'inclinaison vers l'arrière permettant avantageusement de faire correspondre l'inclinaison du siège replié avec l'inclinaison du dossier d'un siège déployé placé devant le siège replié.

Dans l'exemple représenté, le pied avant 20 est formé par une tôle pliée selon un profil en U avec deux flasques latéraux 60 et 61 (figure 5). L'un des flasques, le flasque numéroté 61, comporte une fente 62 formant glissière pour un barreau 64 solidaire de l'extrémité libre de la jambe de force 24. L'un des flasque comporte un tampon en matériau élastique 65 au niveau de l'encoche 52. Le barreau 64 est un boulon vissé sur deux plaques 66 soudées sur le tube 50 formant embout. Une bague de frottement 68 est placée autour du barreau entre les deux plaques 66. Le flasque 61 situé présentant la fente 62 ne présente pas de tampon élastique dans l'encoche 52.

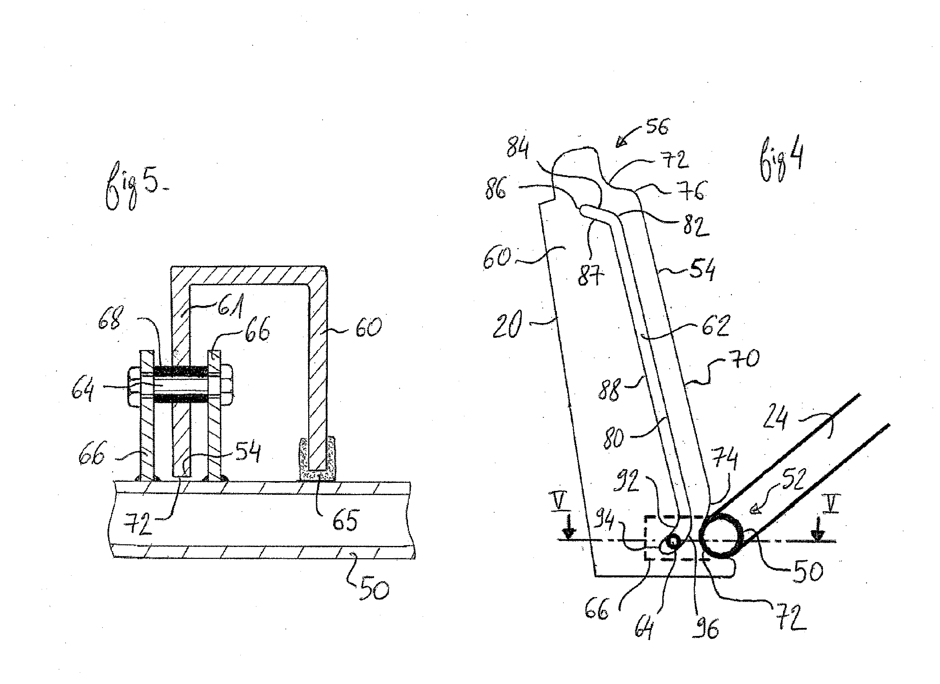

Dans l'exemple représenté, la tranche 54 du pied 20, transversale à l'axe longitudinal du véhicule, comporte une portion plane 70 entre les encoches 52 et 56 (figure 4). Chaque encoche 52 et 56 présente une portion cylindrique 72. La portion cylindrique 72 de l'encoche 52 située à proximité de l'embase 44 est raccordée à la portion plane 70 par un congé 74 tangent aux dites portions cylindrique 72 et plane 70. La portion cylindrique 72 de l'encoche 54 située à l'extrémité haute du pied 20 est raccordée à une première portion plane 76 inclinée vers le bas et l'arrière. La portion plane inclinée 76 est raccordée à la portion plane 70 par un congé 78 tangent aux dites portion planes 76 et portion plane 70. La portion plane 76 est sensiblement perpendiculaire à la jambe de force 24 quand le siège 10 est en position repliée, au bénéfice de la répartition des efforts dans le piétement.

La fente 62 est découpée dans le pied avant 20 et débouche sur chaque surface longitudinale du flasque 60. Les surfaces transversales du pied 20 délimitant la fente 62 comportent une surface plane arrière 80 parallèle à la surface plane 70. La surface 80 est raccordée par un congé 82 à une surface plane 84 inclinée raccordée à une surface de fond supérieur 86 selon une portion de cylindre. La surface 86 est raccordée à une surface plane 87 parallèle à la surface 84. La surface 87 est raccordée par l'intermédiaire d'un congé à une surface plane avant 88 parallèle à la surface plane 80. La surface 88 est raccordée par l'intermédiaire d'un congé à une surface recourbée avant 92 selon une portion de cylindre parallèle à une partie de la portion 72 de l'encoche 52. La surface recourbée avant 92 est raccordée à une surface de fond inférieur 94 selon une portion de cylindre. La surface de fond 94 est raccordée à une surface recourbée arrière 96 selon une portion de cylindre parallèle à la portion 72. La surface 96 est raccordée par l'intermédiaire d'un congé à la surface plane 80.

Dans la position déployée du siège 10, la bague de frottement 68 du barreau 64 est en correspondance des surfaces 92 et 96, le barreau 64 étant dans le prolongement horizontal de la jambe de force 24 dont l'embout 50 est en correspondance de la portion 72 de l'encoche 52. Un jeu peut subsister entre la portion 72 du flasque 61 et l'embout 50.

Dans la position repliée du siège 10, la bague de frottement 68 du barreau 64 est en correspondance des surfaces 84 et 87 à proximité du fond supérieur 86, le barreau 64 étant dans le prolongement de la jambe de force 24 dont l'embout 50 est en correspondance de la portion 72 de l'encoche 56, juste au bout de la portion plane 76. Ici, le barreau 64 est décalé vers l'avant par rapport à l'intersection de l'axe de la jambe de force avec le milieu de la fente 62.

Entre les position déployées et repliées du siège 10, l'embout 50 de la jambe de force circule le long de la tranche arrière 54 du pied 20 et le barreau 64 circule dans la fente 62 qui forme une glissière pour la bague de frottement 68, l'angle d'inclinaison entre la jambe de force 24 et le pied variant entre les deux position du siège. La tranche arrière 54 du pied avant 20 forme une piste de guidage de l'embout 50 de extrémité de la jambe de force 24 le long du pied entre les encoches 52 et 56. La fente 62 forme une piste de guidage du barreau placé à l'extrémité libre de la jambe de force 24 à proximité de l'embout 50. La bague du barreau 64 monté sur l'embout 50 par les plaques 66, en correspondance avec la fente 62 formant glissière de guidage et de maintien, forme élément de liaison de la jambe de force 24 contre la tranche arrière 54 du pied avant 20. Avantageusement, en cas de choc, l'embout 50 est maintenu contre le pied par le barreau maintenu dans la fente 62 et le siège à très peu de risque de se déplacer accidentellement, au bénéfice de la sécurité.

## Revendications

1. Siège pour véhicule automobile, le siège (10) comportant un piétement (12) et un fauteuil (14), le fauteuil étant mobile d'une position déployée à une position repliée sur un premier pied (20) du piétement monté entre le fauteuil et un élément (40) de plancher du véhicule, le piétement comportant un second pied (22) qui s'étend entre le fauteuil et l'élément de plancher dans la position déployée du fauteuil et qui est séparé d'au moins l'un du fauteuil et de l'élément de plancher quand le fauteuil est dans la position repliée, le piétement comportant une jambe de force (24) montée articulée à une première extrémité par rapport au fauteuil à un endroit distinct de celui où est monté le premier pied, une seconde extrémité de la jambe de force étant mobile entre une première et une seconde position sur le premier pied, **caractérisé en ce que** le premier pied (20) comporte une piste de guidage (54, 62) de la deuxième extrémité de la jambe de force (24) le long dudit pied et **en ce que** des éléments de liaison (64, 66, 68) maintiennent la deuxième extrémité de la jambe de force selon la piste de guidage.

2. Siège selon la revendication 1, **caractérisé en ce que** la piste de guidage (54, 62) comporte une glissière (62) ménagée dans le premier pied (20), un barreau (64) des éléments de liaison, solidaires de la deuxième extrémité de la jambe de force (24), étant apte à circuler dans la glissière.

3. Siège selon la revendication 2, **caractérisé en ce que** la glissière (62) est au moins partiellement parallèle à un bord transversal (54) du premier pied (20), le barreau (64) étant préférentiellement monté dans un prolongement de la jambe de force (24), la glissière étant préférentiellement une fente ménagée dans le premier pied.

4. Siège selon l'une quelconque des revendications précédentes, **caractérisé en ce que** le premier pied (20) comporte au moins une encoche (52) de réception de la deuxième extrémité de la jambe de force (24) pour la position déployée du fauteuil (14) et une encoche (56) de réception de la jambe de force pour la position repliée du fauteuil, les encoches (52, 54) étant ménagées dans un bord transversal (54) du premier pied.

5. Siège selon la revendication 4, **caractérisé en ce que** la piste de guidage (54, 62) comporte au moins une portion inclinée (70) vers l'avant du bas vers le haut, l'encoche de réception (56) de la jambe de force (24) pour la position repliée du fauteuil étant située à proximité de l'extrémité supérieure du premier pied (20) et comportant une surface (76) inclinée vers le bas de l'avant vers l'arrière, perpendiculairement à la direction de la jambe de force quand le fauteuil (14) est en position replié.

6. Siège selon l'une quelconque des revendications 3 à 5, **caractérisé en ce que** la deuxième extrémité de la jambe de force (24) est adapté à circuler sur le bord transversal (54).

7. Siège selon l'une quelconque des revendications 4 à 6, **caractérisé en ce que** la deuxième extrémité de la jambe de force (24) comporte un embout (50) de coopération avec les encoches (52, 56).

8. Siège selon l'une quelconque des revendications précédentes, **caractérisé en ce que** le premier pied (20) est un pied avant sensiblement vertical, la jambe de force (24) étant inclinée vers l'arrière, du bas vers le haut, le siège (10) comportant préférentiellement un élément d'étaiement (26) incliné vers l'arrière, de haut en bas, entre le premier pied (20) et le second pied (22).

9. Siège selon l'une quelconque des revendications précédentes, **caractérisé en ce que** le fauteuil (14) comporte une assise (30) et un dossier (32) pliable l'un contre l'autre et placés préférentiellement sensiblement verticalement en position repliée du fauteuil.

10. Véhicule **caractérisé en ce qu'**il comporte un siège (10) selon l'une quelconque des revendications précédentes.
